# EUROPÄISCHE PATENTSCHRIFT

(11) **EP 1 206 688 B1**
(45) Veröffentlichungstag und Bekanntmachung des Hinweises auf die Patenterteilung: **24.12.2008**
(21) Anmeldenummer: 00951182.5
(22) Anmeldetag: 23.08.2000
(51) Int. Cl.: G01K 7/16, G01K 17/16

(54) **THERMISCHER DURCHFLUSSMESSER**
THERMAL FLOW METER
DEBITMETRE THERMIQUE

(30) Priorität: 23.08.1999 DE 19939942
(43) Veröffentlichungstag der Anmeldung: 22.05.2002
(73) Patentinhaber: ABB Research Ltd., 8050 Zürich (CH)
(72) Erfinder: BYATT, Anthony, CH-5313 Klingnau (CH); MATTER, Daniel, CH-5200 Brugg (CH); KLEINER, Thomas, CH-5422 Fislisbach (CH); PRETRE, Philippe, CH-5405 Baden-Dättwil (CH); RÜEGG, Walter, CH-5304 Endingen (CH); GENG, Weigung, CH-5415 Nusbaumen (CH)
(74) Vertreter: ABB Patent Attorneys
(86) Internationale Anmeldenummer: PCT/CH2000/000448
(87) Internationale Veröffentlichungsnummer: WO 2001/014839

(56) Entgegenhaltungen:
- EP-A- 0 101 119
- EP-A- 0 103 150
- EP-A- 0 180 974
- DE-C- 3 340 793
- GB-A- 2 077 435
- US-A- 4 779 458

## Beschreibung

### Technisches Gebiet

Die Erfindung bezieht sich auf eine elektrische Messvorrichtung zur Erfassung eines Fluid-Energiebezuges gemäss Oberbegriff des Patentanspruches 1.

### Stand der Technik

Bei den bestehenden Energiemessgeräten zur Bestimmung des Energiebezuges, beispielsweise des Warmwasserbezuges, wird aufgrund eines Produktes einer gemessen Vorlauf- und Rücklauftemperatur des Wasserkreislaufes und einer gemessenen Durchflussmenge ein Verbrauchswert bestimmt.

Dabei wird für jede Messgrösse ein eigenes Messmittel eingesetzt. Als Durchflussmesser werden meistens Flügelradzähler eingesetzt. Die Vor- und Rücklauftemperaturen werden mittels Temperaturfühlern, meistens in Form von PTC-Widerständen bestimmt. Bei diesen PTC-Widerständen wird die Änderung des elektrischen Widerstandes in Abhängigkeit der Wassertemperatur gemessen. Eine derartige Messvorrichtung für ein Warmwasserverteilsystem ist beispielsweise in DE-A-34'10'998 beschrieben. Die Verwendung von drei verschiedenen Messmitteln ist aufwendig und bedingt drei getrennte Messstellen innerhalb des Wasserrohres.

Es ist ferner bekannt, Durchflussmengen von Fluiden mittels thermischer Durchflussmesser zu bestimmen. Diese beinhalten ein elektrisches Heizelement sowie einen thermosensitiven Detektor, welche beide in ein zu messendes Fluid eingetaucht werden. Das elektrische Heizelement wird erhitzt und gibt seine Wärme an das vorbeiströmende Fluid ab. Stromabwärts ist der thermosensitive Detektor angeordnet, welcher den Zeitpunkt detektiert, an welchem das erwärmte Fluid an ihm vorbeiströmt. Die Srömungsgeschwindigkeit und somit die Durchflussmenge lässt sich anhand des Abstandes zwischen Heizelement und Detektor und der Zeitdifferenz zwischen Erwärmung und Detektion berechnen. Ein derartiger thermischer Durchflussmesser ist in US-A-4'483'200 offenbart.

Ferner ist aus DE-A-36'37'497 ein Durchflussmesser bekannt, welcher einen von einem Medium umströmten Messsensor aufweist, der gepulst aufgeheizt wird und wobei die Zeit berechnet wird, nach welcher der Sensor sich auf eine vorgegebene Temperatur abgekühlt hat. Auch EP-A-0'210'509 offenbart einen ähnlichen Durchflussmesser, bei welchem jedoch das Abkühlverhalten des Messsensors während eines vorbestimmten Zeitraums beobachtet wird.

Die EP 0'180'974. offenbart eine elektrische Messvorrichtung gemäss Oberbegriff des unabhängigen Anspruchs. Durch Verschmutzung der Sonde wird der Wärmeübergang zwischen Fluid und Sonde gestört und die Messung verfälscht. Als Abhilfe werden eine schmutzabweisende Beschichtung oder eine periodische Reinigung der Sonde vorgeschlagen.

Die EP 0'103'150 offenbart eine elektrische Messvorrichtung mit Temperatursensoren zur Messung einer Vor- und Rücklauftemperatur und mit einem unabhängigen thermischen Durchflussmesser. Zur Lösung des Verschmutzungsproblems wird eine mechanische Reinigung der Aussenfläche des Messfühlers vorgeschlagen, z. B. durch Einbau der Einrichtung mit einem bewegbaren Schaberelement in einem manuell betätigbaren Ventil.

Die EP 0'101'119 offenbart eine elektrische Messvorrichtung ebenfalls mit Temperatursensoren und separatem Durchflussmesser. Mit je einem identischen Durchflussmesser im Vor- und Rücklauf wird eine redundante Durchflussmessung durchgeführt. Der Einfluss von Verschmutzung durch Verkalkung, Korrosion o. ä. wird dadurch klein gehalten, dass ein exakt symmetrisches Design für die Durchflussmesser vorgesehen ist.

### Darstellung der Erfindung

Es ist deshalb Aufgabe der Erfindung, ein verbessertes Energiemessgerät, insbesondere zur Messung eines Warmwasserbezuges in einem Heizsystem, zu schaffen, welches eine reduzierte Störempfindlichkeit bei Verschmutzung aufweist.

Diese Aufgabe wird durch eine elektrische Messvorrichtung zur Erfassung eines Fluid-Energiebezuges mit den Merkmalen des Patentanspruches 1 gelöst.

Ein Energiemessgerät gemäss Oberbegriff von Anspruch 1 verfügt erfindungsgemäss über zwei Durchflussmesser, die unterschiedliche Wärmekapazitäten und/oder unterschiedliche thermische Leitfähigkeiten zur Kompensation von Messfehlern aufweisen, welche durch Verschmutzung oder Abrasion hervorgerufen sind. Die Temperaturmessung erfolgt dabei vorzugsweise im ungeheizten Zustand des Temperatursensors.

Als Durchflussmesser wird hierfür ein Messmittel eingesetzt, in welchem ein Sensorelement angeordnet ist, das mit einem zu messenden Fluid thermisch wirkverbunden ist. Das Sensorelement wird erwärmt und ein zeitlicher Verlauf einer im Sensorelement stattfindenden Temperaturänderung eines Heiz- und/oder Abkühlvorganges gemessen. Da der Heiz- und Abkühlvorgang von der Durchflussgeschwindigkeit des Fluids und somit von der Durchflussmenge abhängt, lässt sich aus seinem zeitlichen Verlauf die Durchflussmenge berechnen. Vorteilhaft ist, dass die Messung unabhängig von einer Erwärmung oder einer zurückgelegten Strecke des Fluides erfolgt.

In einer bevorzugten Ausführungsform weist der Durchflussmesser zwei Sensorelemente auf, welche in Strömungsrichtung geeignet, insbesondere hintereinander, angeordnet sind und/oder sie weisen unterschiedliche Wärmekapazitäten oder thermische Leitfähigkeiten auf. Dadurch lassen sich

Messfehler, verursacht durch Schmutzablagerungen am Durchflussmesser oder Abrasion der Sensoren, kompensieren.

Weitere vorteilhafte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:
- Figur 1a: eine perspektivische Darstellung eines Rohrstückes mit einem Durchflussmesser;
- Figur 1b: einen Querschnitt durch die Ebene A-A gemäss Figur 1a;
- Figur 1c: einen Querschnitt durch eine zweite Ausführungsform des Durchflussmessers;
- Figur 2a: eine perspektivische Darstellung eines Rohrstückes mit einem Durchflussmesser gemäss einer dritten Ausführungsform;
- Figur 2b: einen Querschnitt durch die Ebene A-A gemäss Figur 2a;
- Figur 2c: einen Querschnitt durch eine vierte Ausführungsform;
- Figur 3a: eine graphische Darstellung eines zeitlichen Verlaufs eines Heizpulses;
- Figur 3b: eine graphische Darstellung eines zeitlichen Verlaufs eines in einem Sensorelement stattfindenden Heiz- und Abkühlvorganges;
- Figur 4: eine perspektivische Darstellung eines Rohrstückes mit zwei Durchflussmessern;
- Figur 5a: einen Längsschnitt durch einen Durchflussmesser;
- Figur 5b: das Temperaturverhalten des Durchflussmessers gemäss Figur 5a;
- Figur 6a: einen Längsschnitt durch einen weiteren Durchflussmesser;
- Figur 6b: das Temperaturverhalten des Durchflussmessers gemäss Figur 6a und
- Figur 7: eine elektrische Messvorrichtung in einem Warmwasserverteilsystem

### Wege zur Ausführung der Erfindung

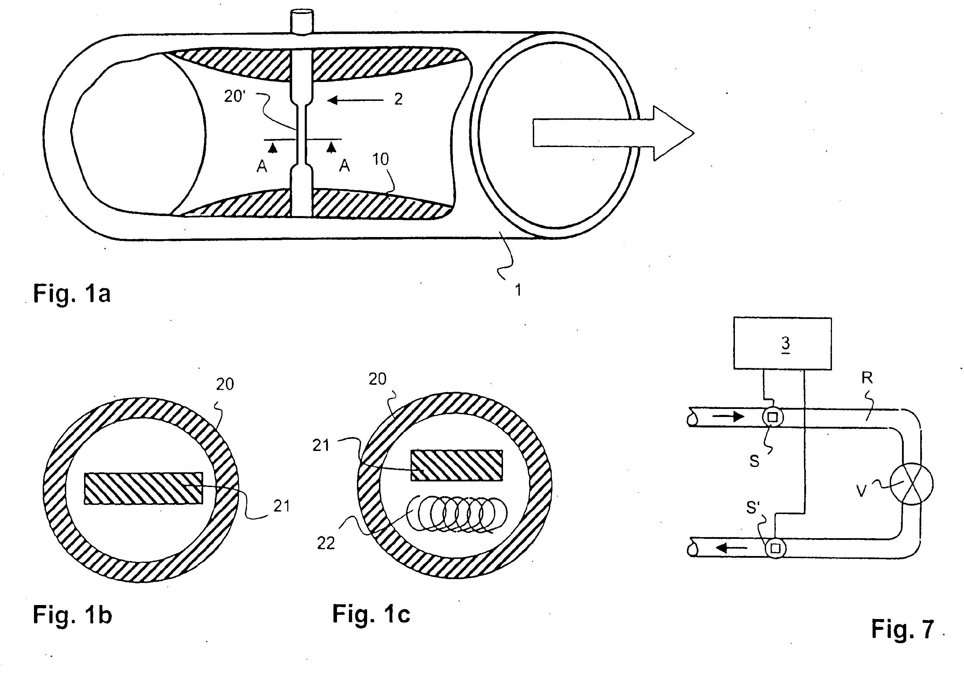

Figur 7 zeigt ein erfindungsgemässes Energiemessgerät zur Erfassung eines Energiebezuges, beispielsweise von Warmwasser eines Warmwasserverteilnetzes oder Kühlwasser oder -luft einer Klimaanlage. Dargestellt ist ein Teil einer Wasserleitung R, welche von einem Verbraucher V, beispielsweise einem Heizkörper, unterbrochen ist. In Strömungsrichtung vor und nach dem Verbraucher V ist je ein Sensor S,S' angeordnet, welche mit einem Steuer- und Auswertegerät 3 verbunden sind.

In einer einfachen Ausführungsform ist ein erster Sensor S ein konventioneller Temperaturfühler zur Bestimmung der Vor- oder Rücklauftemperatur und ein zweiter Sensor S' ein nachfolgend beschriebener Durchflussmesser zur Bestimmung einer Durchflussmenge und der noch nicht vom ersten Sensor S gemessenen Vor- oder Rücklauftemperatur

In einer bevorzugten Ausführungsform werden jedoch beide Sensoren S,S' von nachfolgend beschriebenen Durchflussmessern gebildet, welche sowohl die Temperaturen wie auch die Durchflussmenge messen

Anhand von Figur 1a wird das Grundprinzip des verwendeten Durchflussmessers erläutert. Ein Rohrstück 1 wird von einem Fluid durchströmt. Die Strömungsrichtung ist mit einem Pfeil gekennzeichnet. In dieses Rohrstück 1 ist ein Durchflussmesser 2 eingeführt, so dass er vom Fluid umspült ist Vorzugsweise weist das Rohrstück 1 in diesem Bereich eine Venturi-Verjüngung 10 zur Erhöhung der Durchflussgeschwindigkeit auf, welche den Innendurchmesser des Rohrstücks 1 auf mindestens annähernd einen Drittel reduziert Der Durchflussmesser 2 erstreckt sich diagonal über die lichte Weite des Rohres, wobei er mindestens an einem Ende fixiert gehalten ist.

Der Durchflussmesser 2 umfasst mindestens ein Sensorelement 21, welches vorzugsweise in einem Gehäuse 20 angeordnet ist, eine nicht dargestellte Steuer- und Auswerteelektronik sowie eine elektrische Energiequelle, beispielsweise eine Batterie. Das Sensorelement 21 ist ein elektrischer Widerstand, vorzugsweise ein PTC-Widerstand mit einem Widerstandswert von 100 - 1000 Ω. Derartige Elemente sind als Temperaturfühler bekannt, beispielsweise als Platinfilme, und sind bereits im Gehäuse 20 integriert erhältlich.

Das Sensorelement 21 ist in thermischer Wirkverbindung mit dem vorbeiströmenden Fluid. Dies lässt sich durch Wahl eines geeigneten Materiales für das Gehäuse 20 sowie eines allfälligen Füllmateriales innerhalb des Gehäuses 20 erreichen Vorzugsweise weist, wie in den Figuren dargestellt, das Gehäuse im Bereich des Sensorelementes 21 eine Verjüngung 20 auf Typische Werte der Verjungung liegen bei 1mm Durchmesser

In Figur 1b ist eine erste, bevorzugte Ausführungsform des Durchflussmessers 2 dargestellt. Im Gehäuse 20 ist lediglich mindestens ein Sensorelement 21 angeordnet, welches sich selber durch Zuführung elektrischer Energie heizen kann.

In Figur 1c ist eine zweite Ausführungsform dargestellt. Im Gehäuse 20 ist zusätzlich zum Sensorelement 21 mindestens ein elektrisches Heizelement 22 angeordnet. Das Heizelement 22 ist ein bekanntes Element, beispielsweise ein Widerstandsdraht.

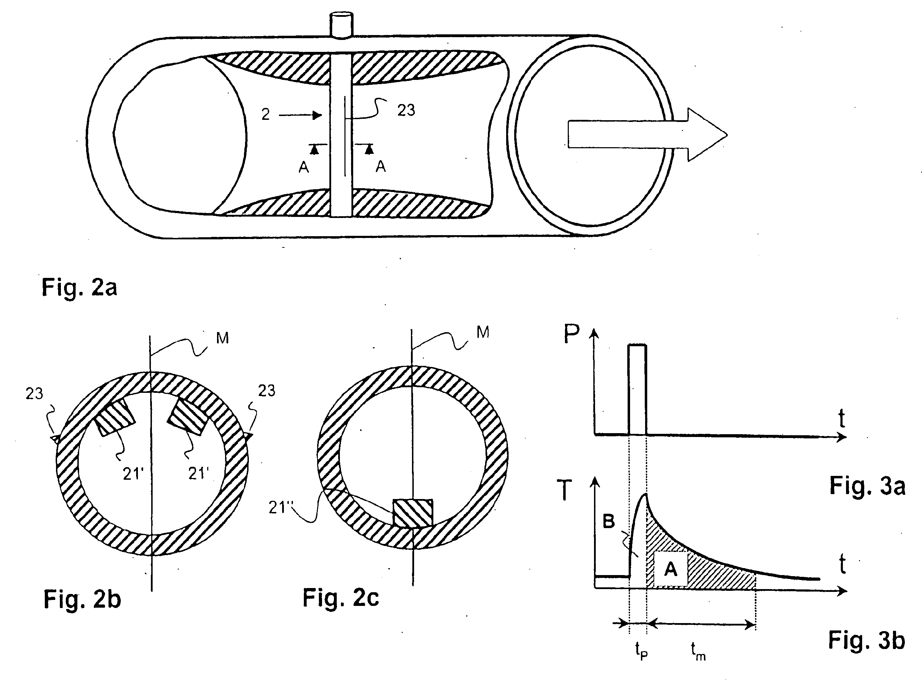

In den Figuren 2a und 2b ist eine dritte Ausführungsform des erfindungsgemässen Durchflussmessers 2 dargestellt, welcher wie in den vorherigen Ausführungsbeispielen in einem Rohrstück 1 angeordnet ist. Wie im Querschnitt gemäss Figur 2b jedoch ersichtlich ist, sind im Gehäuse 20 des Durchflussmessers 2 mehrere Sensorelemente 21 angeordnet. Auf der in Strömungsrichtung hinteren Innenseite des Gehäuses 20 sind zwei hintere Sensorelemente 21' angeordnet, welche mindestens annähernd symmetrisch zu einer, parallel zur Strömungsrichtung verlaufenden Mittelebene M ausgerichtet sind. Zur Brechung der Strömung sind vor diesen hinteren Sensorelementen 21' an der Aussenseite des Gehäuses 20 Brechungsmittel 23 angebracht, beispielsweise vorstehende, mindestens annähernd senkrecht zur Strömungsrichtung ausgerichtete Rippen.
In Figur 2c ist eine vierte Ausführungsform dargestellt. Anstelle von zwei hinteren Sensorelementen ist mindestens ein, hier genau ein vorderes Sensorelement 21" vorhanden, welches auf der vorderen Innenseite des Gehäuses 20 angeordnet und mindestens annähernd symmetrisch zur Mittelebene M ausgerichtet ist.
Auch bei dieser Ausführungsform sind entweder die Sensorelemente die eigenen Heizelemente oder es sind zusätzliche Heizelemente vorhanden.

Anhand der Figuren 3a und 3b wird im folgenden erläutert, wie sich diese Durchflussmesser im Energiemessgerät zur Messung der Durchflussmenge und der Temperatur einsetzen lassen:
Die Temperaturmessung entspricht einer Temperaturmessung mittels eines PTC-Widerstandes Der Widerstand des Sensorelementes im elektrisch ungeheizten Zustand wird bestimmt und daraus anhand einer Eichkurve die Temperatur des Fluids ermittelt.
Zur Messung der Durchflussmenge wird ein elektrisches Element des Durchflussmessers 2 gepulst geheizt. Typische Pulslängen betragen 1- 10 ms mit einer Wiederholrate von 10 s Das geheizte Element ist in der Ausführungsform gemäss Figur 1c das Heizelement 22, in der bevorzugten Ausführungsform gemäss Figur 1b jedoch das Sensorelement 21 selber. In beiden Ausführungsformen wird das Sensorelement 21 warm, sei es durch direkte elektrische Energiezufuhr, sei es durch Wärmeleitung oder strahlung Typische Temperaturerhöhungen liegen dabei bei 0.1 bis 2°C, vorzugsweise 1°C.

In Figur 3a ist ein Heizpuls dargestellt, wobei mit P die Leistung und mit tₚ die Zeitspanne für das Anliegen des Pulses bezeichnet ist Ein zeitliches Temperaturverhalten des Sensorelementes 21 ist in Figur 3b dargestellt, wobei T die Temperatur des Sensorelementes bezeichnet. Das zeitliche Verhalten hängt von der Strömungsgeschwindigkeit des vorbeiströmenden Fluids und somit von der Durchflussmenge ab.

Dieses zeitliche Temperaturverhalten wird nun gemessen, indem die Änderung des elektrischen Widerstandes des Sensorelementes 21, oder genauer die Spannungsänderung bei gleichem elektrischen Strom, gemessen wird Es lassen sich dabei verschiedene Zeitspannen zur Messung benützen

In einer ersten Variante wird das Abkühlverhalten innerhalb einer vordefinierten Zeitspanne tₘ beobachtet. Die entsprechende Fläche ist in Figur 3b mit einem A bezeichnet. Vorzugsweise wird die Zeitspanne tₘ so bemessen, dass sie vor einer Abflachung des Abkühlverhaltens endet.
In einer zweiten Variante oder zusätzlich zur ersten Variante wird das zeitliche Verhalten des Erwärmungsvorganges des Sensorelementes beobachtet.
In einer anderen Variante wird solange geheizt, bis ein vordefinierter Temperatur- beziehungsweise Widerstandswert erreicht ist. Diese Messung ist in Figur 3b mit einem B bezeichnet. Es lassen sich auch beide Messungen kombinieren.

In einer bevorzugten Variante wird das Sensorelement nicht ständig periodisch gepulst, sondern die Abstände der Pulse werden in Abhängigkeit der gemessenen Durchflussmengen verlängert beziehungsweise verkürzt. Dadurch wird der elektrische Energiebedarf zur Heizung des Sensorelementes im Fall, dass sich die Fluidenergie-Bezugsrate nicht stark ändert, reduziert. Die Lebensdauer der Batterie des Durchflussmessers ist dadurch erhöht.

Weist das Energiemessgerät zwei derartige Durchflussmesser auf, so lassen sich Messfehler kompensieren. Derartige Messfehler werden durch Verschmutzung oder Abrasion hervorgerufen. Vorteilhaft ist, dass das Energiemessgerät wiederum nur zwei Messmittel aufweist, nämlich, wenn einer der Durchflussmesser den ersten Temperatursensor zur Messung der Vorlauftemperatur und der zweite Durchflussmesser den zweiten Temperatursensor zur Messung der Rücklauftemperatur bildet.

In einer einfachen Ausführungsform, die nicht Teil der Erfindung ist, sind die zwei Durchflussmesser identisch aufgebaut. In einer bevorzugten Ausführungsform gemäß der Erfindung weisen sie jedoch unterschiedliche Wärmekapazitäten und/oder unterschiedliche thermische

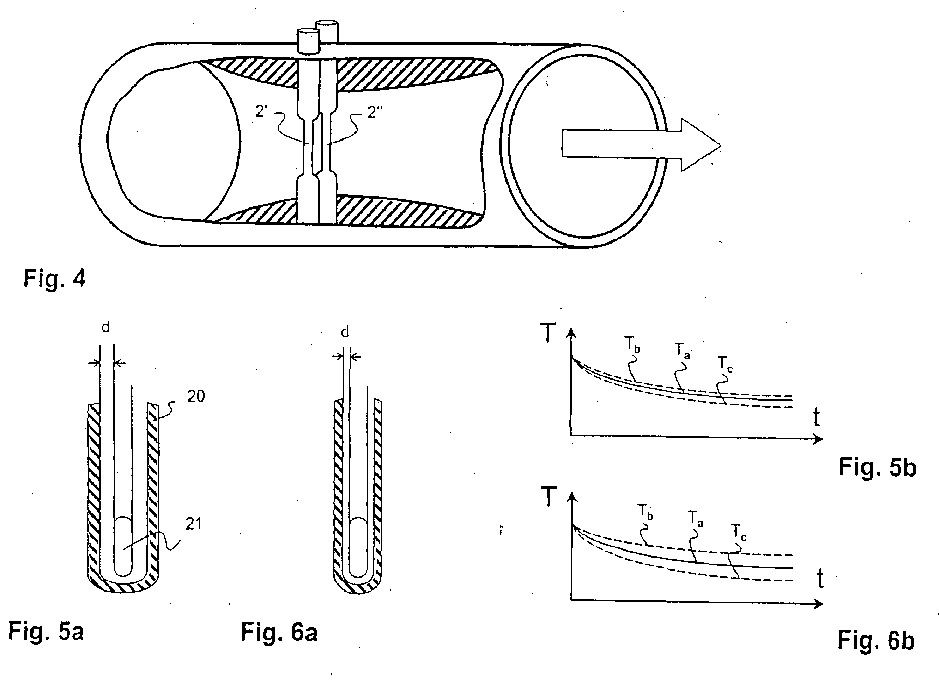

Leitfähigkeiten auf. Zwei derartige Durchflussmesser sind in den Figuren 5a und 6a dargestellt. Dabei unterscheidet sich der Durchflussmesser gemäss Figur 5a vom anderen dadurch, dass der Abstand d zwischen Sensorelement und Gehäuseaussenwand grösser ist. Das entsprechende Temperaturverhalten ist in den Figuren 5b und 6b dargestellt, wobei mit Tₐ das Temperaturverhalten im unverschmutzten Zustand, mit T_{b} dasjenige im verschmutzten Zustand und mit T_{c} dasjenige bei Abrasion dargestellt ist. Wie in den Figuren erkennbar ist, weist das Sensorelement gemäss Figur 5a mit der grösseren Wärmekapazität beziehungsweise der schlechteren thermischen Leitfähigkeit ein undifferenzierteres Temperaturverhalten auf.

In einer weiteren bevorzugten Ausführungsform sind im Vor- und/oder im Rücklauf zwei Durchflussmesser 2',2" angeordnet, welche vorzugsweise in Strömungsrichtung nebeneinander angeordnet sind. Dies ist in Figur 4 dargestellt. Diese Verdopplung der Durchflussmesser dient wiederum zur Vermeidung von Messfehlern, aber auch zur Redundanz.

### Bezugszeichenliste

- 1: Rohrstück
- 10: Venturi-Verjüngung

- 2: Durchflussmesser
- 2': erster Durchflussmesser
- 2": zweiter Durchflussmesser
- 20: Gehäuse
- 20': Verjüngung
- 21: Sensorelement
- 21': hinteres Sensorelement
- 22': vorderes Sensorelement
- 22: Heizelement
- 23: Mittel zur Strömungsbrechung

- 3: Steuer- und Auswertegerät

- R: Wasserleitung
- V: Verbraucher
- S: erster Sensor
- S': zweiter Sensor
- d: Abstand
- t: Zeit
- tₚ: Zeitspanne für das Anliegen eines Pulses
- tₘ: Zeitspanne der Messung
- T: Temperatur
- Tₐ: Temperaturverhalten im unverschmutzten Zustand
- T_{b}: Temperaturverhalten im verschmutzten Zustand
- T_{c}: Temperaturverhalten bei Abrasion

## Patentansprüche

1. Elektrische Messvorrichtung zur Erfassung eines Fluid-Energiebezuges, mit mindestens zwei Temperatursensoren (S, S') zur Bestimmung einer Vor- und einer Rücklauftemperatur, wobei die Temperatursensoren (S, S') mit einem Steuer- und Auswertegerät (3) verbunden sind und einer der Temperatursensoren (S, S') durch einen Durchflussmesser (2) gebildet ist, wobei zur Messung einer Durchflussmenge ein elektrisches Element des Durchflussmessers gepulst beheizbar ist, ein Sensorelement des Durchflussmessers mittels des elektrischen Elements erwärmbar ist, einen temperaturabhängigen elektrischen Widerstand aufweist und mit dem zu messenden Fluid thermisch in Wirkverbindung bringbar ist, und Mittel vorhanden sind, welche einen zeitlichen Verlauf eines in dem Sensorelement stattfindenden Heiz- und/oder Abkühlvorganges erfassen, **dadurch gekennzeichnet, dass** die Messvorrichtung zwei derartige Durchflussmesser aufweist und die Durchflussmesser unterschiedliche Wärmekapazitäten und/oder unterschiedliche thermische Leitfähigkeiten zur Kompensation von Messfehlern aufweisen, die durch Verschmutzung oder Abrasion hervorgerufen sind.

2. Messvorrichtung nach Anspruch 1, **dadurch gekennzeichnet, dass** des sensorelement des Durchflussmessers mit der grösseren Wärmekapazität bzw. der schlechteren thermischen Leitfähigkeit ein undifferenzierterens Temperaturverhalten (Tₐ, T_{b}, T_{c}) im unverschmutzten Zustand, verschmutzten Zustand und bei Abrasion aufweist.

3. Messvorrichtung nach Anspruch 2, **dadurch gekennzeichnet, dass** in einem der Durchflussmesser das Sensorelemente in einem Gehäuse (20) angeordnet ist und durch Wahl eines geeigneten Materials für das Gehäuse (20) sowie eines allfälligen Füllmaterials innerhalb des Gehäuses (20) in thermischer Wirkverbindung mit dem vorbeiströmenden Fluid ist.

4. Messvorrichtung nach Anspruch 3, **dadurch gekennzeichnet, dass** das Gehäuse (20) im Bereich des Sensorelements eine Verjüngung (20') aufweist.

5. Messvorrichtung nach Anspruch 2, **dadurch gekennzeichnet, dass** in dem Durchflussmesser mit der grösseren Wärmekapazität bzw. der schlechteren thermischen Leitfähigkeit ein Abstand (d) zwischen Sensorelement und Gehäuse aussen grösser ist.

6. Messvorrichtung nach Anspruch 1, **dadurch gekennzeichnet, dass** einer der Durchflussmesser einen ersten Temperatursensor (S) zur Messung der Vorlauftemperatur und der zweite Durchflussmesser einen zweiten Temperatursensor (S') zur Messung der Rücklauftemperatur bildet.

7. Messvorrichtung nach Anspruch 1, **dadurch gekennzeichnet, dass** im Vorlauf oder im Rücklauf die beiden Durchflussmesser in Strömungsrichtung nebeneinander angeordnet sind.

8. Messvorrichtung nach Anspruch 1, **dadurch gekennzeichnet, dass** im Vorlauf und im Rücklauf je zwei Durchflussmesser in Strömungsrichtung nebeneinander angeordnet sind.

9. Messvorrichtung nach Anspruch 1, **Dadurch gekennzeichnet, dass** alle Temperatursensoren (S, S') durch je einen Durchflussmesser (2) gebildet sind.

10. Messvorrichtung nach Anspruch 1, **dadurch gekennzeichnet, dass** das elektrische Element des Durchflussmessers zugleich ein Heizelement und das Sensorelement ist.

11. Messvorrichtung nach Anspruch 1, **dadurch gekennzeichnet, dass** das Sensorelement ein PTC-Widerstand ist.

12. Messvorrichtung nach Anspruch 1, **dadurch gekennzeichnet, dass** oder Durchflussmesser (2) ein rohrförmiges Gehäuse (20) aufweist, in welchem zwei Sensorelemente (21') auf der in Strömungsrichtung hinteren Seite des Gehauses (20) und mindestens annähernd symmetrisch zu einer parallel zur Strömungsrichtung verlaufenden Mittelebene (M) des Gehäuses (20) angeordnet sind, wobei auf der Aussenseite des Gehäuses (20) Mittel (23) zur Brechung der Strömung angebracht sind.

13. Messvorrichtung nach Anspruch 1, **dadurch gekennzeichnet, dass** der Durchflussmesser (2) ein rohrförmiges Gehäuse (20) aufweist und dass mindestens ein vorderes Sensorelement (21") vorhanden ist, welches auf der in Strömungsrichtung vorderen Innenseite des Gehäuses (20) angeordnet ist.

## Claims

1. Electrical measuring apparatus for detecting a fluid energy parameter, having at least two temperature sensors (S, S') for determining a feed temperature and a return temperature, with the temperature sensors (S, S') being connected to a control and evaluation device (3) and one of the temperature sensors (S, S') being formed by a flow meter (2), with, in order to measure a flow rate, it being possible to heat an electrical element of the flow meter in a pulsed manner, it being possible to heat up a sensor element of the flow meter by means of the electrical element, the said sensor element having a temperature-dependent electrical resistor and it being possible to thermally and operatively connect the said sensor element to the fluid to be measured, and means being present which detect a time profile of a heating and/or cooling process which takes place in the sensor element, **characterized in that** the measuring apparatus has two such flow meters and the flow meters have different thermal capacities and/or different thermal conductivities for compensating measurement errors which are caused by soiling or abrasion.

2. Measuring apparatus according to Claim 1, **characterized in that that** sensor element of the flow meter with the greater thermal capacity or the poorer thermal conductivity has an undifferentiated temperature behaviour (Tₐ, T_{b}, T_{c}) in the unsoiled state, soiled state and when worn.

3. Measuring apparatus according to Claim 2, **characterized in that**, in one of the flow meters, the sensor element is arranged in a housing (20) and is thermally and operatively connected to the fluid flowing past by selecting a suitable material for the housing (20) and a filling material (if any) within the housing (20).

4. Measuring apparatus according to Claim 3, **characterized in that** the housing (20) has a tapered section (20') in the region of the sensor element.

5. Measuring apparatus according to Claim 2, **characterized in that** a distance (d) between the sensor element and the housing outer wall is greater in the flow meter with the larger thermal capacity or the poorer thermal conductivity.

6. Measuring apparatus according to Claim 1, **characterized in that** one of the flow meters forms a first temperature sensor (S) for measuring the feed temperature and the second flow meter forms a second temperature sensor (S') for measuring the return temperature.

7. Measuring apparatus according to Claim 1, **characterized in that** the two flow meters are arranged next to one another in the flow direction in the feed or in the return.

8. Measuring apparatus according to Claim 1, **characterized in that** in each case two flow meters are arranged next to one another in the flow direction in the feed and in the return.

9. Measuring apparatus according to Claim 1, **characterized in that** all the temperature sensors (S, S') are formed by a respective flow meter (2).

10. Measuring apparatus according to Claim 1, **characterized in that** the electrical element of the flow meter is also a heating element and the sensor element.

11. Measuring apparatus according to Claim 1, **characterized in that** the sensor element is a PTC resistor.

12. Measuring apparatus according to Claim 1, **characterized in that** the flow meter (2) has a tubular housing (20) in which two sensor elements (21') are arranged on that side of the housing (20) which is at the rear in the flow direction and at least approximately symmetrically to a centre plane (M) of the housing (20) which runs parallel to the flow direction, with means (23) for breaking the flow being fitted on the outer face of the housing (20).

13. Measuring apparatus according to Claim 1, **characterized in that** the flow meter (2) has a tubular housing (20), and **in that** at least a front sensor element (21") is present which is arranged on that inner face of the housing (20) which is at the front in the flow direction.

## Revendications

1. Dispositif de mesure électrique pour détecter un rapport fluide/énergie, comprenant au moins deux sondes de température (S, S') pour déterminer une température aller et une température de retour, les sondes de température (S, S') étant reliées avec un appareil de contrôle et d'analyse (3) et l'une des sondes de température (S, S') étant réalisée par un débitmètre (12), un élément électrique du débitmètre pouvant être chauffé de manière impulsionnelle pour mesurer un débit, un élément de détection du débitmètre pouvant être chauffé au moyen de l'élément électrique, présentant une résistance électrique dépendant de la température et pouvant être mis en liaison thermiquement active avec le fluide à mesurer, et des moyens étant présents qui détectent une courbe dans le temps d'un processus de chauffage et/ou de refroidissement qui a lieu dans l'élément de détection, **caractérisé en ce que** le dispositif de mesure présente deux débitmètres de ce type et les débitmètres présentent des capacités thermiques différentes et/ou des conductivités thermiques différentes en vue de compenser les erreurs de mesure qui sont provoquées par l'encrassement ou l'abrasion.

2. Dispositif de mesure selon la revendication 1, **caractérisé en ce que** l'élément de détection du débitmètre ayant la capacité thermique la plus élevée ou la conductivité thermique la plus mauvaise présente une tenue en température (Tₐ, T_{b}, T_{c}) non différenciée en l'absence d'encrassement, en cas d'encrassement et en cas d'abrasion.

3. Dispositif de mesure selon la revendication 2, **caractérisé en ce que** dans l'un des débitmètres, l'élément de détection est disposé dans un boîtier (20) et se trouve en liaison thermiquement active avec le fluide qui s'écoule par le choix d'un matériau approprié pour le boîtier (20) et d'un éventuel matériau de remplissage à l'intérieur du boîtier (20).

4. Dispositif de mesure selon la revendication 3, **caractérisé en ce que** le boîtier (20) présente un rétrécissement (20') dans la zone de l'élément de détection.

5. Dispositif de mesure selon la revendication 2, **caractérisé en ce que** dans le débitmètre ayant la capacité thermique la plus élevée ou la conductivité thermique la plus mauvaise, un écart (d) entre l'élément de détection et la paroi extérieure du boîtier est plus grand.

6. Dispositif de mesure selon la revendication 1, **caractérisé en ce que** l'un des débitmètres forme une première sonde de température (S) pour mesurer la température aller et le deuxième débitmètre forme une deuxième sonde de température (S') pour mesurer la température de retour.

7. Dispositif de mesure selon la revendication 1, **caractérisé en ce que** les deux débitmètres sont disposés dans le sens de l'aller ou du retour l'un à côté de l'autre dans le sens de l'écoulement.

8. Dispositif de mesure selon la revendication 1, **caractérisé en ce que** deux débitmètres sont à chaque fois disposés dans le sens de l'aller et du retour l'un à côté de l'autre dans le sens de l'écoulement.

9. Dispositif de mesure selon la revendication 1, **caractérisé en ce que** toutes les sondes de température (S, S') sont formées à chaque fois par un débitmètre (2) .

10. Dispositif de mesure selon la revendication 1, **caractérisé en ce que** l'élément électrique du débitmètre est en même temps un élément chauffant et l'élément de détection.

11. Dispositif de mesure selon la revendication 1, **caractérisé en ce que** l'élément de détection est une résistance CTP.

12. Dispositif de mesure selon la revendication 1, **caractérisé en ce que** le débitmètre (2) présente un boîtier tubulaire (20) dans lequel deux éléments de détection (21') sont disposés du côté arrière du boîtier (20) dans le sens de l'écoulement et au moins approximativement de manière symétrique par rapport à un plan central (M) du boîtier (20) qui s'étend parallèlement au sens de l'écoulement, des moyens (23) destinés à briser l'écoulement étant disposés sur le côté extérieur du boîtier (20).

13. Dispositif de mesure selon la revendication 1, **caractérisé en ce que** le débitmètre (2) présente un boîtier tubulaire (20) et qu'il existe au moins un élément de détection avant (21") qui est disposé sur le côté intérieur du boîtier (20) à l'avant dans le sens de l'écoulement.
